# EUROPÄISCHE PATENTSCHRIFT

(11) **EP 1 882 117 B1**
(45) Veröffentlichungstag und Bekanntmachung des Hinweises auf die Patenterteilung: **08.10.2008**
(21) Anmeldenummer: 06724380.8
(22) Anmeldetag: 18.04.2006
(51) Int. Cl.: F16H 61/20

(54) **VERFAHREN ZUM STEUERN DES FAHRBETRIEBES VON KRAFTFAHRZEUGEN ODER ANDEREN FAHRZEUGEN**
METHOD FOR CONTROLLING THE DRIVING OPERATION OF MOTOR VEHICLES OR OTHER VEHICLES
PROCEDE POUR COMMANDER LE MODE DE CONDUITE D'AUTOMOBILES OU D'AUTRES VEHICULES

(30) Priorität: 20.05.2005 DE 102005023246
(43) Veröffentlichungstag der Anmeldung: 30.01.2008
(73) Patentinhaber: ZF Friedrichshafen AG, 88038 Friedrichshafen (DE)
(72) Erfinder: REITH, Ulrich, 88281 Schlier (DE); STEINBORN, Mario, 88046 Friedrichshafen (DE)
(86) Internationale Anmeldenummer: PCT/EP2006/003514
(87) Internationale Veröffentlichungsnummer: WO 2006/122624

(56) Entgegenhaltungen:
- DE-A1- 10 061 099
- DE-A1- 10 158 103
- US-A- 5 157 966

## Beschreibung

Die vorliegende Erfindung betrifft ein Verfahren zum Steuern des Fahrbetriebes von Kraftfahrzeugen oder anderen Fahrzeugen gemäß dem Oberbegriff des Patentanspruches 1.

Es sind bereits Verfahren zum Steuern des Fahrbetriebes von Kraftfahrzeugen bekannt, bei denen bestimmte Fahrzustände beispielsweise mittels Drehzahlsensoren erfasst und in einer Steuereinheit ausgewertet werden, um etwa ein Antiblockiersystem, ein Antischlupfregelungssystem oder dergleichen anzusteuern. Derartige Drehzahlsensoren liefern eine Drehzahl, nicht jedoch die dazugehörige Drehrichtung. Falls die Kenntnis der Drehrichtung der Räder oder bestimmter Bauelemente des Antriebsstranges von Bedeutung ist, muss diese im Allgemeinen aufgrund von verschiedenen Parametern mit Hilfe eines Bestimmungsalgorithmus in verhältnismäßig aufwendiger Weise ermittelt werden.

DE10 061 099A1 offenbart ein Verfahren zum Steuern des Fahrbetriebes von Kraftfahrzeugen oder anderen Fahrzeugen, wobei über ein einzelnes Rad und/oder Bauelement im Antriebsstrang zugeordnete Drehsensor bestimmte Fahrzustände erfasst, in einer Steuereinheit ausgewertet und in Steuerbefehle für bestimmte Funktionen des Fahrzeuges oder in Warnsignale umgesetzt werden, wobei als Drehsensor ein Drehrichtungssensor eingesetzt wird; wobei die aktuelle DrehRichtung wenigstens eines Rades bzw. eines Bauelementes im Antriebsstrang erfasst und zur Feststellung der Betriebszustände "Rad oder Bauteil dreht" oder "Rad oder Bauteil dreht nicht" bzw. der Fahrzustände "Fahrzeug fährt, "Fahrzeug steht" bzw. "Fahrzeug fährt vorwärts" oder "Fahrzeug fährt rückwärts" bzw. "Rad oder Bauteil dreht vorwärts" oder "Rad oder Bauteil dreht rückwärts" ausgewertet wird.

Vor diesem Hintergrund liegt der Erfindung die Aufgabe zugrunde, ein Verfahren zum Steuern des Fahrbetriebes von Kraftfahrzeugen oder dergleichen Fahrzeuge zu schaffen, bei welchem ein aufwendiger Bestimmungsalgorithmus zur Ermittlung der relevanten Drehzahlen entbehrlich wird.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind.

Drehrichtungssensoren sind an sich bekannt, jedoch zum Steuern des Fahrbetriebes von Kraftfahrzeugen bislang noch nicht eingesetzt worden. Der Erfindung liegt die Erkenntnis zugrunde, dass der Einsatz von Drehrichtungssensoren nicht nur aufwendige Bestimmungsalgorithmen zur Drehzahlbestimmung entbehrlich macht, sondern darüber hinaus zusätzliche nützliche Funktionen für den Fahrzeugbetrieb ermöglicht.

Demnach geht die Erfindung aus von einem Verfahren zum Steuern des Fahrbetriebes von Kraftfahrzeugen und dergleichen, beispielsweise Rad- und/oder Kettenfahrzeuge, wobei über einzelnen Rädern und/oder Bauelementen im Antriebsstrang zugeordnete Drehsensoren bestimmte Fahrzustände erfasst, in einer Steuereinheit ausgewertet und in Steuerbefehle für bestimmte Funktionen des Fahrzeuges oder in Warnsignale umgesetzt werden. Unter Warnsignalen werden hier ganz allgemein optische oder akustische Signale sowie Anzeigen verstanden.

Zur Lösung der gestellten Aufgabe ist bei diesem Verfahren zusätzlich vorgesehen, dass als Drehsensoren jeweils Drehrichtungssensoren verwendet werden.

Die Erfindung macht sich die weitere Erkenntnis zunutze, dass die Information über die aktuelle Drehrichtung auch die Information impliziert, ob überhaupt eine Drehbewegung vorliegt oder nicht. Herkömmlicherweise wird die Information "es liegt eine Drehbewegung vor" aus der Information der Drehzahl abgeleitet. Wenn die Drehzahl gleich Null ist, liegt keine Drehbewegung vor. Wenn die Drehzahl größer als Null (oder größer als ein definierter Schwellenwert) ist, liegt eine Drehbewegung vor. Beim Einsatz von Drehrichtungssensoren kann diese Feststellung, ob eine Drehbewegung vorliegt oder nicht, auch durch die Feststellung ersetzt werden, ob eine Drehrichtung erkannt wurde oder nicht.

Bei einem Einsatz von Drehrichtungssensoren gemäß der vorliegenden Erfindung können demnach sowohl Funktionen realisiert werden, für die allein die Kenntnis relevant ist, ob eine Drehung vorliegt oder nicht, als auch Funktionen, für die die Kenntnis der aktuellen Drehrichtung relevant ist.

An dieser Stelle sollen einige in der vorliegenden Beschreibung verwendete Ausdrücke näher erläutert werden:
- Der Begriff "Fahrzustände" beschreibt die Fahrzeugbewegung bis zum Stillstand. Er umfasst demnach die Zustände "Fahrzeug fährt", "Fahrzeug steht", "Fahrzeug fährt vorwärts" und "Fahrzeug fährt rückwärts".
- Der Begriff "Betriebszustände" beschreibt die Bewegung einzelner Elemente des Fahrzeuges, er umfasst also etwa Zustände wie "Rad dreht", "Rad dreht nicht", "Bauteil dreht" usw.
- Unter dem Begriff "Fahrbedingung" werden vom Fahrer vorgegebene Bedingungen entsprechend einem Fahrwunsch verstanden, also beispielsweise "Gaspedal betätigt", "Bremse nicht betätigt", "Gang eingelegt" usw.
- Unter dem Begriff "Anhaltebedingung" werden vom Fahrer vorgegebene Bedingungen entsprechend einem Anhaltewunsch verstanden, beispielsweise "Bremse betätigt", "Gaspedal nicht betätigt" usw.

Gemäß einer Ausgestaltung des Verfahrens gemäß der Erfindung ist vorgesehen, dass die aktuelle Drehrichtung wenigstens eines Rades bzw. eines Bauelementes im Antriebsstrang erfasst und zur Feststellung der Betriebszustände "Rad oder Bauteil dreht" oder "Rad oder Bauteil dreht nicht" bzw. der Fahrzustände "Fahrzeug fährt" oder "Fahrzeug steht" ausgewertet wird. Wie weiter vorne bereits erläutert wurde, ist in diesem Fall nicht die aktuelle Drehrichtung sondern nur die Feststellung relevant, ob eine Drehbewegung vorliegt oder nicht.

Unter Ausnutzung dieser Eigenschaften ist gemäß einer anderen Ausgestaltung der Erfindung vorgesehen, dass bei Feststellung des Fahrzustandes "Fahrzeug fährt" und bei gleichzeitigem Vorliegen von vorgegebenen Anhaltebedingungen (z.B. bestimmter Bremsdruck; Gaspedal nicht betätigt) der Bremsdruck automatisch bis zum Erreichen des Fahrzustands "Fahrzeug steht" erhöht oder ein Warnsignal ausgegeben wird. Auf diese Weise wird das Fahrzeug entweder automatisch angehalten oder der Fahrer wird gewarnt, so dass er entsprechende Maßnahmen zum Sichern des Fahrzeuges treffen und beispielsweise ein Wegrollen bei bestehendem Anhaltewunsch vermeiden kann.

Gemäß einer anderen Ausgestaltung der Erfindung wird die aktuelle Drehrichtung von mehreren angetriebenen Rädern erfasst, wobei bei Feststellung des Betriebszustandes "wenigstens ein Rad dreht und wenigstens ein Rad dreht nicht" und gleichzeitigem Vorliegen von vorgegebenen Fahrbedingungen (z.B. Gang eingelegt; Gaspedal betätigt) eine Antriebsschlupfregelung aktiviert wird, die in an sich bekannter Weise die Antriebsleistung des durchdrehenden Rades auf stehende Räder umverteilt.

In ähnlicher Weise kann die aktuelle Drehrichtung von mehreren gebremsten Rädern erfasst werden, wobei bei Feststellung des Betriebszustandes "wenigstens ein Rad dreht und wenigstens ein Rad dreht nicht" und gleichzeitigem Vorliegen von vorgegebenen Fahrbedingungen (z.B. Gang eingelegt, Bremspedal betätigt) ein Antiblockiersystem aktiviert wird, welches in an sich bekannter Weise den Bremsdruck beim blockierenden Rad vermindert, bis es sich wieder dreht.

In einer weiteren Ausgestaltung der Erfindung wird die aktuelle Drehrichtung der beiden Räder eines angetriebenen Räderpaares erfasst, wobei bei Feststellung des Betriebszustandes "ein Rad dreht und ein Rad dreht nicht" und gleichzeitigem Vorliegen von vorgegebenen Fahrbedingungen (z.B. Gang eingelegt; Gaspedal betätigt) die automatische Zuschaltung einer Differentialsperre erfolgt.

Eine weitere vorteilhafte Nutzung des erfindungsgemäßen Verfahrens ergibt sich für Fahrzeuge mit einer Liftachse bzw. Hubachse. Dabei ist erfindungsgemäß vorgesehen, dass die aktuelle Drehrichtung wenigstens eines Rades der Liftachse erfasst wird, und dass bei Feststellung des Betriebszustandes "Rad der Liftachse dreht" und des Fahrzustandes "Fahrzeug fährt" sowie bei Vorliegen der Fahrbedingung "Liftachse angehoben" bzw. bei Feststellung des Betriebszustandes "Rad der Liftachse dreht nicht" und des Fahrzustandes "Fahrzeug fährt" sowie bei gleichzeitigem Vorliegen der Fahrbedingung "Liftachse abgesenkt" ein Warnsignal ausgelöst wird.

Damit kann überprüft werden, ob eine Liftachse tatsächlich angehoben oder abgesenkt wurde. Melden beispielsweise die Sensoren an den Rädern der Liftachse keine Drehrichtung, kann bei Fahrt davon ausgegangen werden, dass die Liftachse angehoben ist. Der Vergleich mit dem Sollzustand, also mit der vom Fahrer vorgegebenen Fahrbedingung "Liftachse angehoben", liefert eine Bestätigung oder gegebenenfalls die Information über eine Fehlfunktion.

Wie weiter vorne bereits ausgeführt wurde, gibt es Funktionen, bei denen die aktuelle Drehrichtung von Rädern oder Bauelementen im Antriebsstrang relevant ist. Diese wird von den erfindungsgemäß eingesetzten Drehrichtungssensoren geliefert.

Unter Ausnutzung dieser Eigenschaften ist gemäß einer weiteren Ausgestaltung der Erfindung vorgesehen, dass die aktuelle Drehrichtung wenigstens eines Rades oder eines Bauelementes im Antriebsstrang erfasst und für eine Feststellung eines Fahrzustandes "Fahrzeug fährt vorwärts" oder "Fahrzeug fährt rückwärts" bzw. "Rad oder Bauteil dreht vorwärts" oder "Rad oder Bauteil dreht rückwärts" ausgewertet wird. Mit dieser Funktion kann beispielsweise überprüft werden, ob ein Fahrzeug sich entsprechend den vom Fahrer vorgegebenen Fahrbedingungen bewegt oder nicht. Im letzteren Fall können entsprechende Gegenmaßnahmen automatisch eingeleitet oder Warnsignale erzeugt werden.

Demgemäß ist bei einer weiteren Ausgestaltung der vorliegendem Erfindung vorgesehen, dass bei Vorliegen einer bestimmten Fahrbedingung (zum Beispiel Vorwärtsgang eingelegt bzw. Rückwärtsgang eingelegt) und bei Feststellung eines dieser Fahrbedingung widersprechenden Fahrzustandes (zum Beispiel Fahrzeug fährt rückwärts bzw. Fahrzeug fährt vorwärts) automatisch eine Bremse betätigt wird. Wählt der Fahrer eines Fahrzeuges etwa einen Vorwärtsgang, will anfahren und ein Drehrichtungssensor erkennt das Abrollen des Fahrzeuges in Richtung rückwärts, so kann eine Bremse aktiviert werden, die dies verhindert. Rollt das Fahrzeug hingegen in die vom Fahrer gewünschte Fahrtrichtung an, könnte eine aktivierte Bremse gelöst werden. Das Abrollen am Berg wäre so möglich.

In Umkehrung der oben beschriebenen Funktion ist gemäß einer anderen Ausgestaltung der Erfindung vorgesehen, dass bei Feststellung eines bestimmten Fahrzustandes (z.B. Fahrzeug fährt vorwärts bzw. Fahrzeug fährt rückwärts) ohne Vorliegen einer entsprechenden Fahrbedingung (z.B. Vorwärtsgang eingelegt bzw. Rückwärtsgang eingelegt) automatisch eine Bremse betätigt wird. Lässt ein Fahrer beispielsweise an einer Steigung sein Fahrzeug ausrollen, könnte eine Bremse aktiviert werden, die das Fahrzeug hält, sobald ein Drehrichtungssensor erkennt, dass das Fahrzeug seine Fahrtrichtung wechselt.

Beim Freischaukeln eines Fahrzeuges ist es wichtig, zu erkennen, wann ein gegen einen Kuhlenrand anfahrendes Fahrzeug anfängt in der Gegenrichtung zu rollen, und schnell darauf zu reagieren, indem die Gegenrichtung freigegeben oder sogar unterstützt wird. Gemäß einer Ausgestaltung der Erfindung ist eine Steuerfunktion "Freischaukeln" vorgesehen, bei welcher bei Feststellung des Fahrzustandes "Fahrzeug steht" nach "Fahrzeug fährt vorwärts" automatisch vom Vorwärtsgang in den Rückwärtsgang geschaltet, und beim Fahrzustand "Fahrzeug steht" nach "Fahrzeug fährt rückwärts" in einen Vorwärtsgang geschaltet wird.

Ein dem gegenüber vereinfachter Verfahrenablauf sieht vor, dass eine Steuerfunktion "Freischaukeln" vorgesehen ist, bei welcher bei Feststellung des Fahrzustandes "Fahrzeug steht" nach einer aktiven Vorwärtsbewegung bzw. Rückwärtsbewegung die Fahrzeugkupplung geöffnet und bei Feststellung des Fahrzustandes "Fahrzeug steht" nach einer jeweiligen passiven Bewegung in der Gegenrichtung die Fahrzeugkupplung wieder für eine aktive Bewegungsphase geschlossen wird. Vorzugsweise wird die Funktion "Freischaukeln" automatisch ausgeschaltet und damit beendet, wenn das Fahrzeug eine vorbestimmte Wegstrecke in einer Richtung zurückgelegt hat, also nicht unmittelbar wieder zum Stehen kommt. Unter dem Begriff "aktiv" wird hier verstanden, dass eine Antriebsverbindung zum Motor besteht, während unter dem Begriff "passiv" verstanden wird, dass das Fahrzeug antriebslos rollt.

Ein kritisches und in manchen Situationen schwieriges Manöver ist das Rückwärtsfahren. Moderne Fahrzeuge bieten deshalb bereits Funktionen, die speziell bei Rückwärtsfahrt aktiviert werden, um diese zu erleichtern bzw. unkritischer zu machen. Solche Systeme werden dann bei anschließender Vorwärtsfahrt wieder deaktiviert.

Die vorliegende Erfindung bietet auch die Möglichkeit, diese Funktionen zu automatisieren. Gemäß einer weiteren Ausgestaltung der Erfindung ist deshalb vorgesehen, dass bei Feststellung des Fahrzustandes "Fahrzeug fährt rückwärts" bzw. "Fahrzeug fährt vorwärts" automatisch für die jeweilige Fahrtrichtung relevante Einstellungen am Fahrzeug vorgenommen werden. So könnte beispielsweise bei Rückwärtsfahrt automatisch der Rückfahrscheinwerfer, eine Rückfahrtwarneinrichtung (z.B. Warnblinker und/oder akustisches Signal), eine Rückfahrtkamera oder ähnliches aktiviert werden. Gegenwärtig ist dafür im Allgemeinen das Schalten eines Rückwärtsganges Voraussetzung, welches durch einen diesbezüglichen Sensor erfasst wird. Damit werden aber die Fälle nicht erfasst, bei denen man das Fahrzeug ohne Schalten eines Rückwärtsganges rückwärts rollen lässt.

Weitere Funktionen zur Erleichterung der Rückwärtsfahrt könnten zudem realisiert werden, nämlich beispielsweise Einstellen der Rückspiegel speziell für die Rückwärtsfahrt, Aufheben einer Scheibenverdunkelung und Wegschwenken, Wegklappen und/oder Einfahren von Karosserie-Anbauteilen, wie Spoilern und dergleichen. Beim Erkennen einer Vorwärtsfahrt könnte das Fahrzeug automatisch wieder in einen für diese Fahrtrichtung geeigneten Zustand versetzt werden.

Bei mehrachsigen Fahrzeugen kann es vorkommen, dass sich bei starkem Lenkungseinschlag, z.B. bei vorwärtsfahrendem Fahrzeug, zumindest ein Rad rückwärts dreht. Durch derartige Drehrichtungserkennung an den Fahrzeugrädern kann eine solche Situation einfach erkannt werden. Gemäß einer weiteren Ausgestaltung der Erfindung ist deshalb vorgesehen, dass bei Feststellung des Fahrzustandes "Fahrzeug fährt vorwärts" bzw. "Fahrzeug fährt rückwärts" und gleichzeitiger Feststellung jeweils des Betriebszustandes "wenigstens ein Rad dreht rückwärts" bzw. "wenigstens ein Rad dreht vorwärts" ein Warnsignal erfolgt, welches den Fahrer auf den zu starken Lenkungseinschlag aufmerksam macht.

Werden bei Fahrzeugstillstand Drehrichtungen an Rädern registriert, kann darauf geschlossen werden, dass der Fahrer den Lenkwinkel des stehenden Fahrzeuges verändert. Für diesen Fall ist vorgesehen, dass bei Feststellung des Fahrzustandes "Fahrzeug steht" und des Betriebszustandes "wenigstens ein Rad dreht" ein Warnsignal erfolgt. Je nachdem, welches Rad in welche Richtung dreht, kann auf die Lenkrichtung geschlossen werden. Wechselt die Drehrichtung eines Rades, so kann auf die Größe des Lenkwinkels geschlossen werden. Zu große Lenkwinkel können in bestimmte Betriebssituationen ausgeschlossen werden, beispielsweise wenn das Fahrzeug aus einer Fahrbahnkuhle herauszuschaukeln ist.

Bei modernen Automatgetrieben kann es vorkommen, dass auf ein Getriebe, welches beispielsweise über 16 Gänge verfügt, die Software versehendlich für ein 12-Gang-Getriebe programmiert wird. Dies kann zur Folge haben, dass das Fahrzeug gegen die gewählte Fahrtrichtung losfährt. Mit einer Drehrichtungserkennung kann diese Situation erkannt und durch geeignete Eingriffe in die Steuerung des Antriebsstranges und/oder der Bremsen entschärft werden.

Darüber hinaus kann das betroffene Datenfeld der Getriebesteuerung automatisch so umparametriert werden, dass nach einmaligem Vorkommen der Situation immer die richtige Parametrisierung des Getriebes aktiv ist. Gezielt angewandt ist so auch eine automatische Hardware-Erkennung realisierbar.

In einer weiteren Ausgestaltung der Erfindung ist deshalb für ein Fahrzeug mit mehrstufigem Automatgetriebe und programmierbarer Gang-Ansteuerung vorgesehen, dass die aktuelle Drehrichtung wenigstens eines Rades oder eines Bauelementes im Antriebsstrang erfasst und mit der jeweiligen, dem geschalteten Gang entsprechenden Soll-Drehrichtung verglichen wird, und dass bei fehlender Übereinstimmung ein Warnsignal ausgegeben wird.
Bei modernen Automatgetrieben ist es nicht möglich, die Bereichsgruppe umzuschalten, wenn ein Fahrzeug beim Rückwärtsfahren eine Grenzgeschwindigkeit überschritten hat. Dies liegt an der Konstruktion der Bereichsgruppen-Synchronisierung. Lässt ein Fahrer sein Fahrzeug rückwärts rollen und beschleunigt dabei über eine bestimmte Grenzgeschwindigkeit, versucht das Getriebe, die Bereichsgruppe umzuschalten. Dies hat eine erhebliche Bauteilbelastung zur Folge. Solche oder ähnliche Situationen lassen sich mit einer Drehrichtungserkennung verhindern oder entschärfen. Eine Drehrichtungserkennung kann so zum Bauteil-Schutz beitragen.

Es ist deshalb gemäß einer weiteren Ausgestaltung der Erfindung für ein Fahrzeug mit einem im Antriebsstrang angeordneten Automatgetriebe vorgesehen, dass die aktuelle Drehrichtung wenigstens eines Bauelements des Getriebes erfasst wird, und dass bei einem der erfassten Drehrichtung nicht entsprechenden Vorgang des Schaltens, Aktivierens oder Deaktivierens von Bereichsgruppen des Getriebes eine automatische Sperrung einer Bereichsgruppenumschaltung erfolgt und/oder ein Warnsignal ausgegeben.

Bei herkömmlichen Fahrzeugen verfügen die Bauelemente im Antriebsstrang eines Fahrzeuges (z.B. im Getriebe) nicht über eine Drehrichtungserkennung. In diesem Fall wird aufgrund von verschiedenen Parametern mit Hilfe eines Bestimmungsalgorithmus auf eine bestimmte Drehrichtung geschlossen. Mit Hilfe einer Drehrichtungserkennung mittels Drehrichtungssensoren kann das Ergebnis des Berechnungsalgorithmus überprüft werden. Zu diesem Zweck wird gemäß einer weiteren Ausgestaltung der Erfindung die aktuelle Drehrichtung wenigstens eines Bauelementes im Antriebsstrang erfasst und mit dem Berechnungsergebnis eines Berechnungsalgorithmus zur Ermittlung der Drehrichtung verglichen.

Gemäß einer weiteren Ausgestaltung der Erfindung werden die aktuellen Drehrichtungen mehrerer Bauelemente im Antriebsstrang erfasst und mit einander verglichen. Durch den Vergleich der Einzelsignale von mehreren Drehrichtungssensoren kann die Fehlfunktion eines Sensors festgestellt werden.

Eine weitere Ausgestaltung der Erfindung sieht vor, dass die aktuelle Drehrichtung der Getriebeausgangswelle erfasst und mit den bekannten Soll-Drehrichtungen bei den unterschiedlichen Schaltzuständen des Getriebes verglichen wird. Fällt beispielsweise ein Wegsensor aus, der die Position eines Getriebeschaltelementes erfassen soll, welches für die Fahrtrichtung des Fahrzeuges und damit die Drehrichtung der Getriebeausgangswelle relevant ist, kann eine Drehrichtungserkennung einen Hinweis liefern, ob der entsprechende Gang geschaltet wurde. Stimmen Sollvorgabe und erfasste Drehrichtung überein, so kann davon ausgegangen werden, dass das Schaltelement durchgeschaltet hat. Stimmen die Sollvorgabe und die Drehrichtung nicht überein, so muss von einer Fehlfunktion ausgegangen werden.

Liefert ein Wegsensor, der die Position des Getriebeschaltelementes erfasst, welches für die Fahrtrichtung des Fahrzeuges und damit die Drehrichtung der Getriebeausgangswelle relevant ist, ein gültiges, aber falsches Signal, so würde dies bei einer Drehrichtungserkennung im Antriebsstrang auffallen, da die tatsächliche Drehrichtung, die Sollvorgabe und die gemessene Position des Schaltelementes nicht zusammen passen würden. Auf diese Weise lässt sich eine Plausibilisierung der Funktion der Wegsensoren des Getriebes erreichen.

Eine Verwendung von Drehrichtungssensoren im Antriebsstrang ermöglicht es auch, auf einen Berechnungsalgorithmus für die Drehrichtung ganz zu verzichten.
Moderne Schienenfahrzeuge können im Allgemeinen in beiden Fahrtrichtungen vollwertig eingesetzt werden. Da derartige Schienenfahrzeuge an ihrem in Fahrtrichtung vorderen Ende jeweils z.B. eine weiße Beleuchtung, am hinteren Ende eine rote Beleuchtung führen müssen, muss diese Beleuchtung bei Umkehrung der Fahrtrichtung umgeschaltet werden. Zu diesem Zweck ist gemäß einer weiteren Ausgestaltung der Erfindung für derartige Schienenfahrzeuge vorgesehen, dass bei Feststellung des Fahrzustandes "Fahrzeug fährt in einer ersten Vorwärtsrichtung" bzw. "Fahrzeug fährt in einer zweiten Vorwärtsrichtung" eine der Fahrtrichtung jeweils entsprechende Zugbeleuchtung automatisch umgeschaltet wird.

Eine weitere spezielle Verwendung des Kerns der Erfindung ist bei Abfallsammelfahrzeugen oder dergleichen mit einem Trittbrett für die mitfahrenden Arbeiter möglich. Um diese nicht zu gefährden, besteht eine Vorschrift, wonach bei besetztem Trittbrett nicht rückwärts gefahren werden darf. Diese Sicherungsfunktion gegen Rückfahrtsfahren wird derzeit vom Einlegen des Rückwärtsganges abhängig gemacht. Mit einer Drehrichtungserkennung könnte auch das Rückwärtsrollen eines solchen Fahrzeuges bei besetztem Trittbrett erkannt und verhindert werden. Zu diesem Zweck ist gemäß einer weiteren Ausgestaltung der Erfindung für Abfallsammelfahrzeuge oder dergleichen mit einem Trittbrett für mitfahrende Arbeiter vorgesehen, dass bei Feststellung des Fahrzustandes "Fahrzeug fährt bzw. rollt rückwärts" bei besetztem Trittbrett eine Rückwärtsfahrsperre automatisch aktiviert und/oder ein Warnsignal ausgegeben wird.

## Patentansprüche

1. Verfahren zum Steuern des Fahrbetriebes von Kraftfahrzeugen oder anderen Fahrzeugen, wobei über einzelnen Rädern und/oder Bauelementen im Antriebsstrang zugeordnete Drehsensoren bestimmte Fahrzustände erfasst, in einer Steuereinheit ausgewertet und in Steuerbefehle für bestimmte Funktionen des Fahrzeuges oder in Warnsignale umgesetzt werden, wobei als Drehsensoren jeweils Drehrichtungssensoren eingesetzt werden und die aktuelle Drehrichtung wenigstens eines Rades bzw. eines Bauelementes im Antriebsstrang erfasst und zur Feststellung der Betriebszustände "Rad oder Bauteil dreht" oder "Rad oder Bauteil dreht nicht" bzw. der Fahrzustände "Fahrzeug fährt", "Fahrzeug steht" bzw. "Fahrzeug fährt vorwärts" oder "Fahrzeug fährt rückwärts" bzw. "Rad oder Bauteil dreht vorwärts" oder "Rad oder Bauteil dreht rückwärts" ausgewertet wird, **dadurch gekennzeichnet, dass** bei Feststellung des Fahrzustandes "Fahrzeug fährt" und bei gleichzeitigem Vorliegen von vorgegebenen Anhaltebedingungen wie bestimmter Bremsdruck; Gaspedal nicht betätigt, der Bremsdruck automatisch bis zum Erreichen des Fahrzustandes "Fahrzeug steht" erhöht und/oder ein Warnsignal ausgegeben wird.

2. Verfahren nach Anspruch 1, **dadurch gekennzeichnet, dass** die aktuelle Drehrichtung von mehreren angetriebenen Rädern erfasst wird, und dass bei Feststellung des Betriebszustandes "wenigstens ein Rad dreht und wenigstens ein Rad dreht nicht" und gleichzeitigem Vorliegen von vorgegebenen Fahrbedingungen (z. B. Gang eingelegt; Gaspedal betätigt) eine Antriebsschlupfregelung aktiviert wird.

3. Verfahren nach einem der Ansprüche 1 oder 2, **dadurch gekennzeichnet, dass** die aktuelle Drehrichtung von mehreren gebremsten Rädern erfasst wird, und dass bei Feststellung des Betriebszustandes "wenigstens ein Rad dreht und wenigstens ein Rad dreht nicht" und gleichzeitigem Vorliegen von vorgegebenen Fahrbedingungen (z. B. Bremspedal betätigt) ein Antiblockiersystem aktiviert wird.

4. Verfahren nach einem der Ansprüche 1 bis 3, **dadurch gekennzeichnet, dass** die aktuelle Drehrichtung der beiden Räder eines angetriebenen Räderpaares erfasst wird, und dass bei Feststellung des Betriebszustandes "ein Rad dreht und ein Rad dreht nicht" und gleichzeitigem Vorliegen von vorgegebenen Fahrbedingungen (z. B. Gang eingelegt; Gaspedal betätigt) die automatische Zuschaltung einer Differentialsperre erfolgt.

5. Verfahren nach einem der Ansprüche 1 bis 4 für ein Fahrzeug mit Liftachse, **dadurch gekennzeichnet, dass** die aktuelle Drehrichtung wenigstens eines Rades der Liftachse erfasst wird, und dass bei Feststellung des Betriebszustandes "Rad der Liftachse dreht" und des Fahrzustandes "Fahrzeug fährt" sowie bei Vorliegen der Fahrbedingung "Liftachse angehoben" bzw. bei Feststellung des Betriebszustandes "Rad der Liftachse dreht nicht" und des Fahrzustandes "Fahrzeug fährt" sowie bei gleichzeitigem Vorliegen der Fahrbedingung "Liftachse abgesenkt" ein Warnsignal erfolgt.

6. Verfahren nach einem der Ansprüche 1 bis 5, **dadurch gekennzeichnet, dass** bei Vorliegen einer bestimmten Fahrbedingung (z. B. Vor wärtsgang eingelegt bzw. Rückwärtsgang eingelegt) und bei Feststellung eines dieser Fahrbedingung widersprechenden Fahrzustandes (z. B. Fahrzeug fährt rückwärts bzw. Fahrzeug fährt vorwärts) automatisch eine Bremse betätigt wird.

7. Verfahren nach einem der Ansprüche 1 bis 6, **dadurch gekennzeichnet, dass** bei Feststellung eines bestimmten Fahrzustandes (z. B. Fahrzeug fährt vorwärts bzw. Fahrzeug fährt rückwärts) ohne Vorliegen einer entsprechenden Fahrbedingung (z. B. Vorwärtsgang eingelegt bzw. Rückwärtsgang eingelegt) automatisch eine Bremse betätigt wird.

8. Verfahren nach einem der Ansprüche 1 bis 7, **dadurch gekennzeichnet, dass** eine Steuerfunktion "Freischaukeln" vorgesehen ist, bei welcher bei Feststellung des Fahrzustandes "Fahrzeug steht" nach "Fahrzeug fährt vorwärts" automatisch vom Vorwärtsgang in den Rückwärtsgang geschaltet und beim Fahrzustand "Fahrzeug steht" nach "Fahrzeug fährt rückwärts" in einen Vorwärtsgang geschaltet wird.

9. Verfahren nach einem der Ansprüche 1 bis 7, **dadurch gekennzeichnet, dass** eine Steuerfunktion "Freischaukeln" vorgesehen ist, bei welcher bei Feststellung des Fahrzustandes "Fahrzeug steht" nach einer aktiven Vorwärtsbewegung bzw. Rückwärtsbewegung die Fahrzeugkupplung geöffnet und bei Feststellung des Fahrzustandes "Fahrzeug steht" nach einer jeweiligen passiven Bewegung in der Gegenrichtung die Fahrzeugkupplung wieder geschlossen wird.

10. Verfahren nach einem der Ansprüche 1 bis 9, **dadurch gekennzeichnet, dass** bei Feststellung des Fahrzustandes "Fahrzeug fährt rückwärts" bzw. "Fahrzeug fährt vorwärts" automatisch für die jeweilige Fahrtrichtung relevante Einstellungen am, Fahrzeug (z. B. Rückspiegelverstellung, Scheibenentdunkelung, Rückfahrbeleuchtung, Rückfahrkamerabetrieb) vorgenommen werden.

11. Verfahren nach einem der Ansprüche 1 bis 10 für Fahrzeuge mit mehreren Achsen, **dadurch gekennzeichnet, dass** bei Feststellung des Fahrzustandes "Fahrzeug fährt vorwärts" bzw. "Fahrzeug fährt rückwärts" und des Betriebszustandes "wenigstens ein Rad dreht rückwärts" bzw. "wenigstens ein Rad dreht vorwärts" ein Warnsignal ausgelöst wird.

12. Verfahren nach einem der Ansprüche 1 bis 11 für Fahrzeuge mit mehreren Achsen, **dadurch gekennzeichnet, dass** bei Feststellung des Fahrzustandes "Fahrzeug steht" und des Betriebszustandes "wenigstens ein Rad dreht" ein Warnsignal erfolgt.

13. Verfahren nach einem der Ansprüche 1 bis 12 für ein Fahrzeug mit einem mehrstufigen Automatgetriebe und einer programmierbarer Gang-Ansteuerung, **dadurch gekennzeichnet, dass** die aktuelle Drehrichtung wenigstens eines Rades oder eines Bauelementes im Antriebsstrang erfasst und mit der jeweiligen, dem geschalteten Gang entsprechenden Soll-Drehrichtung verglichen wird, und dass bei fehlender Übereinstimmung ein Warnsignal ausgegeben wird.

14. Verfahren nach einem der Ansprüche 1 bis 13 mit einem im Antriebsstrang angeordneten Automatgetriebe, **dadurch gekennzeich**n e t , dass die aktuelle Drehrichtung wenigstens eines Bauelementes des Getriebes erfasst wird, und dass bei einem der erfassten Drehrichtung nicht entsprechenden Vorgang des Schaltens, Aktivierens oder Deaktivierens einer Bereichsgruppenumschaltung des Getriebes eine automatische Sperrung erfolgt und/oder ein Warnsignal ausgegeben wird.

15. Verfahren nach einem der Ansprüche 1 bis 14, **dadurch gekennzeichnet, dass** die aktuelle Drehrichtung wenigstens eines Bauelementes im Antriebsstrang erfasst und mit einem Berechnungsergebnis eines Berechnungsalgorithmus zur Ermittlung der Drehrichtung verglichen wird.

16. Verfahren nach einem der Ansprüche 1 bis 15, **dadurch gekennzeichnet, dass** die aktuellen Drehrichtungen mehrerer Bauelemente im Antriebsstrang erfasst und miteinander verglichen werden.

17. Verfahren nach einem der Ansprüche 1 bis 16, **dadurch gekennzeichnet, dass** die aktuelle Drehrichtung der Getriebeausgangswelle erfasst und mit den bekannten Soll-Drehrichtungen bei den unterschiedlichen Schaltzuständen des Getriebes verglichen wird.

18. Verfahren nach einem der Ansprüche 1 bis 17 für Fahrzeuge mit zwei zueinander entgegengesetzten Vorwärtsfahrtrichtungen, **dadurch gekennzeichnet, dass** bei Feststellung des Fahrzustandes "Fahrzeug fährt in einer ersten Vorwärtsrichtung" bzw. "Fahrzeug fährt in einer zweiten Vorwärtsrichtung" eine der Fahrtrichtung jeweils entsprechende Beleuchtung eingeschaltet wird.

19. Verfahren nach einem der Ansprüche 1 bis 17 für Abfallsammelfahrzeuge oder dergleichen, mit einem Trittbrett für mitfahrende Arbeiter, **dadurch gekennzeichnet, dass** bei Feststellung des Fahrzustandes "Fahrzeug fährt bzw. rollt rückwärts" bei belastetem Trittbrett eine Rückwärtsfahrsperre aktiviert und/oder ein Warnsignal ausgegeben wird.

## Claims

1. Method for controlling the operation of motor or other vehicles, in the process of which via rotation sensors assigned to individual wheels and/or components in the driveline, specific driving conditions are sensed, analyzed in a control unit and converted into control commands for specific vehicle functions, or into warning signals, with direction-of-rotation sensors being used as rotation sensors and the current sense of rotation of at least one wheel or one driveline component being sensed and analyzed for determination of the operating conditions "wheel or component rotating", or "wheel or component not rotating", or of the driving conditions "vehicle driving", "vehicle at standstill", or "vehicle driving forward", or "vehicle driving rearward", or "wheel or component rotating forward", or "wheel or component rotating rearward", **characterized in that** determination of the driving condition "vehicle driving" and simultaneous presence of preset stopping conditions - such as a specific brake pressure, gas pedal not depressed - results in automatic increase in the brake pressure until the driving condition "vehicle at standstill" is realized and/or in a warning signal being output.

2. Method according to claim 1, **characterized in that** the current sense of rotation of several driven wheels is sensed and that determination of the operating condition "at least one wheel rotating and at least one wheel not rotating" and simultaneous presence of preset driving conditions (e.g. gear engaged, gas pedal depressed) results in a traction-slip controller being activated.

3. Method according to one of the claims 1 or 2, **characterized in that** the current sense of rotation of several braked wheels is sensed and that determination of the operating condition "at least one wheel rotating and at least one wheel not rotating" and simultaneous presence of preset driving conditions (e.g. brake pedal depressed) results in an antiblock system being activated.

4. Method according to one of the claims 1 thru 3, **characterized in that** the current sense of rotation of the two wheels of a driven pair of wheels is sensed and that determination of the operating condition "one wheel rotating and one wheel not rotating" and simultaneous presence of preset driving conditions (e.g. gear engaged, gas pedal depressed) results in automatic engagement of a differential lock.

5. Method according to one of the claims 1 thru 4 for a vehicle with lifting axle, **characterized in that** the current sense of rotation of at least one wheel of the lifting axle is sensed and that determination of the operating condition "lifting axle wheel rotating" and of the driving condition "vehicle driving" as well as presence of the driving condition "lifting axle lifted" or determination of the operating condition "lifting axle wheel not rotating" and of the driving condition "vehicle driving" and simultaneous presence of the driving condition "lifting axle lowered" results in a warning signal being output.

6. Method according to one of the claims 1 thru 5, **characterized in that** presence of a specific operating condition (e.g. forward gear engaged or reverse gear engaged) and determination of a conflicting driving condition (e.g. vehicle driving rearward or vehicle driving forward) results in automatic activation of a brake.

7. Method according to one of the claims 1 thru 6, **characterized in that** determination of a specific driving condtion (e.g. vehicle driving forward or vehicle driving rearward) and absence of a corresponding operating condition (e.g. forward gear engaged or reverse gear engaged) results in automatic activation of a brake.

8. Method according to one of the claims 1 thru 7, **characterized in that** a control function "freeing vehicle by rocking" is provided causing automatic change from forward into reverse gear upon determination of the driving condition "vehicle at standstill" after "vehicle driving forward" and automatic engagement of a forward gear upon determination of the driving condition "vehicle at standstill" after "vehicle driving rearward".

9. Method according to one of the claims 1 thru 7, **characterized in that** a control function "freeing vehicle by rocking" is provided causing the vehicle clutch to open upon determination of the driving condition "vehicle at standstill" after active forward or rearward movement, and to close again upon determination of the driving condition "vehicle at standstill" after passive movement in the respective opposite direction.

10. Method according to one of the claims 1 thru 9, **characterized in that** determination of the driving condition "vehicle driving rearward" or "vehicle driving forward" results in the automatic adjustment of the settings relevant for the respective direction of travel (e.g. rearview mirror adjustment, reversing pane darkening, backup light, rearview camera operation).

11. Method according to one of the claims 1 thru 10 for vehicles with several axles, **characterized in that** upon determination of the driving condition "vehicle driving forward" or "vehicle driving rearward" and of the operating condition "at least one wheel rotating rearward" or "at least one wheel rotating forward", a warning signal is triggered.

12. Method according to one of the claims 1 thru 11 for vehicles with several axles, **characterized in that** upon determination of the driving condition "vehicle at standstill" and of the operating condition "at least one wheel rotating", a warning signal is issued.

13. Method according to one of the claims 1 thru 12 for a vehicle with a multistage automatic transmission and programmable gear control, **characterized in that** the current sense of rotation of at least one wheel or one driveline component is sensed and compared with the respective nominal sense of rotation corresponding to the shifted gear, and that a warning signal is outputted in the event of a negative match.

14. Method according to one of the claims 1 thru 13, with a driveline-arranged automatic transmission, **characterized in that** the current sense of rotation of at least one transmission component is sensed and that any shifting, activation or deactivation action of the range unit not corresponding to the direction of rotation sensed causes an automatic lock to be engaged and/or a warning signal to be issued.

15. Method according to one of the claims 1 thru 14, **characterized in that** the current sense of rotation of at least one driveline component is sensed and compared with a result of a caculation algorithm for determination of the sense of rotation.

16. Method according to one of the claims 1 thru 15, **characterized in that** the current directions of rotation of several driveline components are sensed and compared with each other.

17. Method according to one of the claims 1 thru 16, **characterized in that** the current sense of rotation of the transmission output shaft is sensed and compared with the known nominal directions of rotation for the various shifting conditions of the transmission.

18. Method according to one of the claims 1 thru 17 for vehicles with two opposed forward driving directions, **characterized** that determination of the driving condition "vehicles driving in first forward direction" or "vehicle driving in second forward direction" results in each case in a lighting corresponding to the respective driving direction being switched on.

19. Method according to one of the claims 1 thru 17 for garbage trucks or similar vehicles with a running board for the workers, **characterized in that** determination of the driving condition "vehicle driving or moving rearward", and of a loaded running board, results in a rearward driving lock being activated and/or a warning signal being issued.

## Revendications

1. Procédé de commande d'un mécanisme d'entraînement de véhicules automobiles ou d'autres véhicules, sachant que des états de conduite déterminés sont enregistrés à l'aide de capteurs associés à des roues individuelles et/ou composants intégrés dans la chaîne cinématique, que ces états de conduite sont interprétés dans une unité de commande et que ces états de conduite sont convertis en instructions de commande pour des fonctions déterminées du véhicule ou en signaux d'avertissement, sachant que en tant que capteurs de rotation sont utilisés respectivement des capteurs du sens de rotation et que le sens de rotation actuel d'au moins une roue ou d'un composant de la chaîne cinématique est enregistré et évalué pour déterminer les états de service "roue ou composant tourne" ou "roue ou composant ne tourne pas" ou les états de conduite "véhicule en marche", "véhicule à l'arrêt" ou "véhicule avance" ou "véhicule recule" ou "roue ou composant tourne en avant" ou "roue ou composant tourne en arrière", **caractérisé en ce que** en cas de détection de l'état de conduite "véhicule en marche" et en cas de présence en même temps de conditions d'arrêt formulées, telles qu'une pression de freinage déterminée, la pédale d'accélérateur n'étant pas actionnée, la pression de freinage est augmentée automatiquement jusqu'à atteindre l'état de conduite "véhicule à l'arrêt" et/ou un signal d'avertissement est émis.

2. Procédé selon la revendication 1, **caractérisé en ce que** est enregistré le sens de rotation actuel de plusieurs roues entraînées, et **en ce que** en cas de détection de l'état de service "au moins une roue tourne et au moins une roue ne tourne pas" et en cas de présence en même temps de conditions de conduite formulées (p.ex. rapport engagé, la pédale d'accélérateur étant actionnée), est activé un système d'antipatinage à l'accélération.

3. Procédé selon une des revendications 1 ou 2, **caractérisé en ce que** est enregistré le sens de rotation actuel de plusieurs roues freinées, et **en ce que** en cas de détection de l'état de service "au moins une roue tourne et au moins une roue ne tourne pas" et en cas de présence en même temps de conditions de conduite formulées (p.ex. pédale de frein actionnée), est activé un système d'antiblocage.

4. Procédé selon une des revendications 1 à 3, **caractérisé en ce que** est enregistré le sens de rotation actuel des deux roues d'un paire de roues entraînées, et **en ce que** en cas de détection de l'état de service "une roue tourne et une roue ne tourne pas" et en cas de présence en même temps de conditions de conduite formulées (p.ex. rapport engagé, la pédale d'accélérateur étant actionnée), est exécuté un actionnement automatique d'un blocage de différentiel.

5. Procédé selon une des revendications 1 à 4 pour un véhicule doté d'un essieu relevable, **caractérisé en ce que** est enregistré le sens de rotation actuel d'au moins une roue de l'essieu relevable, et **en ce que** en cas de détection de l'état de service "roue de l'essieu relevable tourne" et de l'état de conduite "véhicule en marche" ainsi que en cas de présence de la condition de conduite "essieu relevable relevé" ou en cas de détection de l'état de service "roue de l'essieu relevable ne tourne pas" et de l'état de conduite "véhicule en marche" ainsi que en cas de présence, en même temps, de la condition de conduite "essieu relevable abaissé" est émis un signal d'avertissement.

6. Procédé selon une des revendications 1 à 5, **caractérisé en ce que** en cas de présence d'une condition de conduite déterminée (p.ex. rapport de marche avant engagé ou rapport de marche arrière engagé) et en cas de détection d'un état de conduite contradictoire à cette condition de conduite (p.ex. véhicule recule ou véhicule avance) un frein est automatiquement actionné.

7. Procédé selon une des revendications 1 à 6, **caractérisé en ce que** en cas de présence d'une condition de conduite déterminée (p.ex. véhicule avance ou véhicule recule) sans présence d'une condition de conduite correspondante (p.ex. rapport de marche avant engagé ou rapport de marche arrière engagé) un frein est automatiquement actionné.

8. Procédé selon une des revendications 1 à 7, **caractérisé en ce que** est prévue une fonction de commande "dégagement", dans laquelle en cas de détection de l'état de conduite "véhicule à l'arrêt" après "véhicule avance" le système passe automatiquement du rapport de marche avant au rapport de marche arrière et en cas de détection de l'état de conduite "véhicule à l'arrêt" après "véhicule recule" le système passe automatiquement à un rapport de marche avant.

9. Procédé selon une des revendications 1 à 7, **caractérisé en ce que** est prévue une fonction de commande "dégagement", dans laquelle en cas de détection de l'état de conduite "véhicule à l'arrêt" après un mouvement actif en avant ou un mouvement en arrière l'embrayage du véhicule est ouvert et en cas de détection de l'état de conduite "véhicule à arrêt" après un mouvement passif correspondant dans le sens inverse l'embrayage du véhicule est à nouveau fermé.

10. Procédé selon une des revendications 1 à 9, **caractérisé en ce que** en cas de détection de l'état de conduite "véhicule recule" ou "véhicule avance" sur le véihicule sont effectués automatiquement des réglages pertinents pour le sens de marche correspondant (par exemple réglage du rétroviseur, désobscurcissement des vitres, réglage du feu de marche arriére, réglage de la caméra de marche arrière).

11. Procédé selon une des revendications 1 à 10 pour véhicules avec plusieurs essieux, **caractérisé en ce que** en cas de détection de l'état de conduite "véhicule avance" ou "véhicule recule" et de l'état de service "au moins une roue tourne en arrière" ou "au moins une roue tourne en avant" le système émet un signal d'avertissement.

12. Procédé selon une des revendications 1 à 11 pour véhicules dotés de plusieurs essieux, **caractérisé en ce que** en cas de détection de l'état de conduite "véhicule à l'arrêt et de l'état de service "au moins une roue tourne" le système émet un signal d'avertissement.

13. Procédé selon une des revendications 1 à 12 pour un véhicule doté d'une boîte automatique à plusieurs étages et d'une unité de commande des rapports programmable, **caractérisé en ce que** le sens de rotation actuel d'au moins une roue ou d'un composant est enregistré dans la chaîne cinématique et comparé avec le sens de rotation de consigne correspondant au rapport engagé, et **en ce que** en cas de discordance le système émet un signal d'avertissement.

14. Procédé selon une des revendications 1 à 13 avec une boîte automatique disposée dans la chaîne cinématique, **caractérisé en ce que** le système enregistre le sens de rotation actuel d'au moins un composant de la boîte de vitesses, et **en ce que** en cas d'un processus de changement de rapports, d'activation ou de désactivation d'une commutation du groupe-relais de la boîte de vitesses pas correspondant au sens de rotation enregistré le système effectue un verrouillage automatique et/ou émet un signal d'avertissement.

15. Procédé selon une des revendications 1 à 14, **caractérisé en ce que** le sens de rotation actuel d'au moins un composant est enregistré dans la chaîne cinématique et comparé avec un résultat de calcul issu d'un algorithme de calcul pour la détermination du sens de rotation.

16. Procédé selon une des revendications 1 à 15, **caractérisé en ce que** les sens de rotation actuels de plusieurs composants sont enregistrés dans la chaîne cinématique est comparés les uns aux autres.

17. Procédé selon une des revendications 1 à 16, **caractérisé en ce que** le sens de rotation actuel de l'arbre de sortie de la boîte de vitesses est enregistré et comparé avec les sens de rotation de consigne connus pour les différents états de commande de la boîte de vitesses.

18. Procédé selon une des revendications 1 à 17 pour véhicules avec deux sens de marche avant opposés l'un par rapport à l'autre, **caractérisé en ce que** en cas de détection de l'état de conduite "véhicule avance dans un premier sens de marche avant" ou "véhicule avance dans un deuxième sens de marche avant" le système enclenche un éclairage correspondant au sens de marche.

19. Procédé selon une des revendications 1 à 17 pour véhicules de collecte de déchets ou similaire, avec un marchepied pour des opérateurs passagers, **caractérisé en ce que** en cas de détection de l'état de conduite "véhicule se déplace ou roule vers l'arrière" lorsque le marchepied est sollicité le système active un verrouillage de marche arrière et/ou émet un signal d'avertissement.
